# EUROPÄISCHE PATENTSCHRIFT

(11) **EP 0 589 283 B1**
(45) Veröffentlichungstag und Bekanntmachung des Hinweises auf die Patenterteilung: **07.05.1997**
(21) Anmeldenummer: 93114378.8
(22) Anmeldetag: 08.09.1993
(51) Int. Cl.: B65G 69/28

(54) **Überladebrücke für Rampen**
Loading bridge for ramps
Pont de transbordement pour rampes

(30) Priorität: 19.09.1992 DE 4231476
(43) Veröffentlichungstag der Anmeldung: 30.03.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 104 555
- DE-A- 3 412 065

## Beschreibung

Die Erfindung betrifft eine Überladebrücke für Rampen mit einer an ihrem rampenseitigen Ende um eine waagerechte Achse verschwenkbar gelagerten Brückenplatte und einer am freien Ende der Brückenplatte befindlichen, ein- und ausfahrbaren, in Brückenlängsrichtung bewegbaren Verlängerung zur Auflage und zur Abstützung auf der zu be- bzw. entladenden Plattform, wobei die Verlängerung (bzw. ein mit ihr bewegbares Teil der Überladebrücke) an ihrer Unterseite mit einer um eine Querachse pendelnd verschwenkbaren Stütze zum Abstützen der in der Ruhestellung befindlichen Überladebrücke auf einem festen Widerlager versehen ist.

Bei bekannten Überladebrücken dieser Art ist die Stütze mittels Querbolzen angelenkt (DE-A-34 12 065). Bei einer weiteren bekannten Überladebrücke (DE-A-31 04 555) ist die Stütze mit einem Querbolzen an der Brückenplatte angelenkt, wobei der Querbolzen in einem schräg nach oben verlaufenden Langloch geführt ist. Bei dieser Überladebrücke ist eine Ruhelage für die Stütze vorgesehen, in der die Stütze in eine Stellung parallel zur Brückenplatte geklappt wird. Das Langloch ist dabei Teil einer Einrichtung, mit der die Stütze in der Ruhelage gegen Herunterklappen gesichert wird.

Bei den bekannten Überladebrücken muß der Querbolzen die gesamten Stützkräfte in der Ruhestellung der Überladebrücke aufnehmen und daher insb. bei wechselnder Belastung gefährdet ist , .

Der Erfindung liegt die Aufgabe zugrunde, die Gelenkstelle zwischen der Verlängerung und der Stütze von Stützkräften zu befreien, wenn sich die Überladebrücke in der Ruhestellung befindet.

Zur Lösung dieser Aufgabe ist erfindungsgemäß die Stütze mittels eines Querbolzens in Brückenlängsrichtung nach vorne und nach hinten an der Verlängerung verschwenkbar und mittels eines zum Eingriff des Querbolzens dienenden Langloches längsverschiebbar gelagert in der Weise, daß die Verlängerung in der Ruhestellung der Brücke auf der oberen Stirnfläche der Stüze unter Ausschluß des Querbolzens als Stützmittel aufliegt.

Im noch nicht verschobenen Zustand der Stütze bzw. bei in Betrieb befindlicher Brücke befindet sich die Stütze in ihrer Pendelstellung mit Hilfe des genannten Querbolzens der die Pendelachse bestimmt. Erfolgt eine Belastung der Stütze, so kann sich diese in Bezug auf die Pendelachse bzw. den sie bestimmenden Bolzen verschieben, wobei dann das obere Ende der Stütze an der Verlängerung zur Anlage kommt, die somit dann die Abstützung übernimmt, während der Bolzen von den Stützkräften ganz befreit ist. Dazu wird in einfacher Weise das Langloch benutzt, in das der Querbolzen eingreift. Indessen kann die Stütze dem Langloch entlang verschoben werden, wobei sie in der Endstellung mit ihrer oberen Stirnfläche die Verlängerung unten berührt.

Somit erfolgt jeweils unten und oben die Abstützung über die dort befindlichen Stirnflächen der Stütze, die unter diesen Voraussetzungen erhebliche Kräfte - auch wechselnde Belastungen - ohne weiteres aufnehmen kann.

Weitere Einzelheiten der Erfindung werden anhand der Zeichnung erläutert, in der ein Ausführungsbeispiel der Erfindung dargestellt ist.

Es zeigen:
- Fig. 1: eine in der Ruhestellung befindliche Überladebrücke in der Seitenansicht,
- Fig. 2: eine für die Brücke gemäss Fig. 1 vorgesehene Stütze in der Wirklage in der Darstellung gemäss Fig. 1 in vergrösserter Wiedergabe,
- Fig. 3: die Stütze gemäss Fig. 2 in der Ansicht von vorne, also in Richtung auf die Rampe gesehen,
- Fig. 4: die Stütze in der Darstellung gemäss Fig. 2 in der Pendelstellung,
- Fig. 5: die Stütze gemäss Fig. 4 in der Ansicht von vorn und
- Fig. 6: eine abgewandelte Stütze in der Wirklage in der Seitenansicht bzw. in der Wiedergabe gemäss Fig. 2.

Am hinteren, rampenseitigen Ende ist eine Brückenplatte 1 um eine quer verlaufende Achse 2 an der Rampe 3 mit einer Ausnehmung 4 zur Aufnahme der Brückenplatte 1, der Rampenkante 5 und der Rampenoberfläche 5' verschwenkbar gelagert. Am vorderen Ende der Brückenplatte 1 befindet sich eine im Sinne des Pfeiles 6 ausfahrbare, jedoch wieder einfahrbare Verlängerung 7, die an einem Schlitten 8 befestigt ist, welcher z.B. durch einen Hydraulikzylinder bewegbar ist. Die Verlängerung 7 dient zur Auflage auf der zu be- bzw. entladenden Plattform eines Fahrzeuges; über die Verlängerung 7 stützt sich die Brückenplatte 1 dabei ab und kann somit allen Höhenänderungen der Plattform folgen.

Die Brückenplatte 1 kann in üblicher Weise durch einen nicht dargestellten hydraulischen Hubzylinder nach oben geschwenkt werden.

Damit der Rampenverkehr bei der in Ruhestellung befindlichen Überladebrücke ungestört vonstatten gehen kann, liegt die Oberfläche 9 der Brückenplatte 1 in der Rampenoberfläche 5'. Dies ist aber nur möglich, weil die Verlängerung 7 bzw. ihr Schlitten 8 und damit die Brückenplatte 1 von einer senkrechten Stütze 10 unterfangen ist, welche sich unten auf einem Vorsprung 11 der Sohle der Vertiefung 4, also auf einem festen Widerlager abstützen kann.

Die Stütze 10 ist als pendelnd aufgehängte Stütze ausgeführt und im Bereich ihres oberen Endes mit einem Querbolzen 12 verbunden, der mit seinen beiden überstehenden Enden 13 in senkrecht verlaufende Langlöcher 14 eingreift, welche von an der Verlängerung 7 bzw. ihrem Schlitten 8 angeschweissten Winkeln 15 gebildet sind. Diese Winkel 15 sind im übrigen mit ihren senkrechten Schenkeln 16 so beieinander angeordnet, dass die im Querschnitt flach rechteckige Stütze 10 sich ungehindert zwischen den beiden Schenkeln 16 bewegen und verschwenken kann.

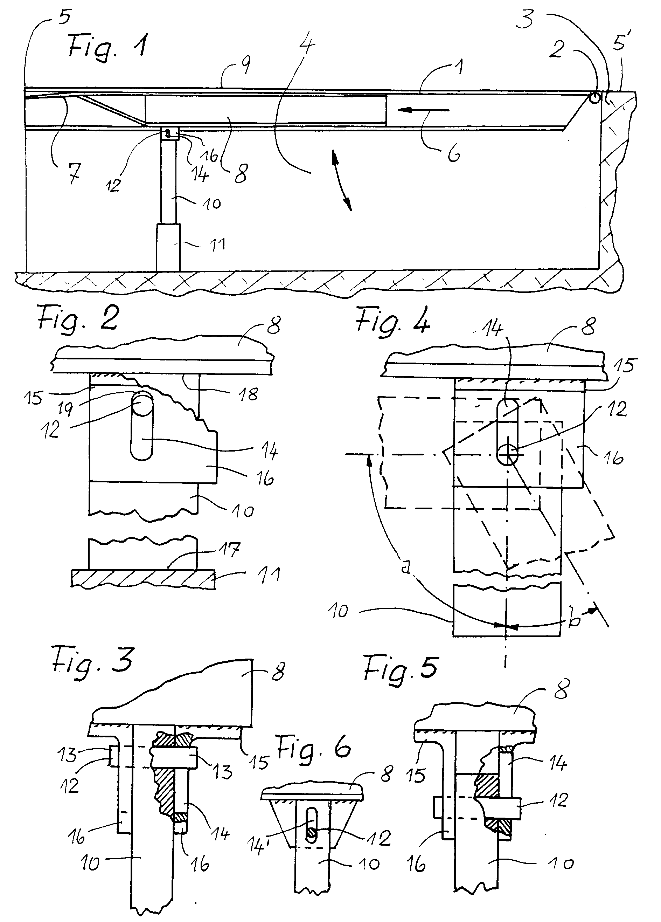

Wichtig ist nun, dass sich nicht nur die untere waagerechte Stirnfläche 17 auf dem Widerlager 11, sondern auch der Schlitten 8 sich auf der oberen, waagerechten Stirnfläche 18 der Stütze 10 abstützt, um so eine optimale Belastung der Stütze 10 herbeizuführen. Dabei sind das Langloch 14 und der Querbolzen 12 so angeordnet, dass in der Stützstellung gemäss Fig. 2 oberhalb des Querbolzens 12 bei 19 noch ein geringes Spiel verbleibt, damit - wie dargelegt - die Abstützung über die Stirnfläche 18 erfolgen kann.

Wird die Stütze 10 durch Hochschwenken der Brückenplatte 1 unwirksam, so rutscht die Stütze 10 aufgrund ihres Eigengewichtes nach unten, bis die Enden 13 der Länge der Langlöcher 14 entsprechend auf der unten liegenden Rundung der Langlöcher 14 aufliegen. In dieser Stellung können die für den Betrieb der Überladebrücke erforderlichen Verschwenkbewegungen der Stütze 10 z.B. in eine etwa waagerechte Stellung nach vorne dem Winkel a entsprechend oder in die entgegengesetzte Lage dem Winkel b entsprechend ausgeführt werden, wobei die Verschwenkung nach hinten z.B. beim Auftauchen von Hindernissen beim Ausfahren der Verlängerung erforderlich werden kann, während die Verschwenkung der Stütze 10 nach vorne z.B. bei Einziehbewegungen der Verlängerung 7 im abgesenkten Zustand der Brücke zweckmässig ist. Bei all diesen Bewegungen der Stütze 10 dienen die Enden 13 des Querbolzens 12 als Schwenkachse, die allerdings bei der Stützung der Brückenplatte 1 keine Rolle spielen.

Hinzu kommt, dass die verschiebbare Lagerung des Querbolzens 12 in den Langlöchern 14 eine Lagekorrektur der Stütze 10 ermöglicht z.B. wenn diese zunächst nicht flächig, sondern auf einer Ecke aufsetzt. Es tritt ein Kantmoment ein, das die Lage der Stütze in die Normalstellung gemäss Fig. 2 und 3 sicherstellt.

Anstelle der Ausbildung gemäss Fig.1-5 kann auch die Gestaltung gemäss Fig. 6 treten, indem der Querbolzen 12 an der Verlängerung 7 bzw. seinem Schlitten 8 und die Stütze 10 mit einem Langloch 14' versehen wird.

Es sei erwähnt, dass nicht nur eine Stütze 10, sondern auch zwei oder mehrere über die Brückenbreite verteilt angeordnete Stützen 10 vorgesehen sein können.

## Patentansprüche

1. Überladebrücke für Rampen mit einer an ihrem rampenseitigen Ende um eine waagerechte Achse verschwenkbar gelagerten Brückenplatte (1) und einer am freien Ende der Brückenplatte (1) befindlichen, ein- und ausfahrbaren, in Brückenlängsrichtung bewegbaren Verlängerung (7) zur Auflage und zur Abstützung auf der be- bzw. entladenden Plattform, wobei die Verlängerung (7) ( bzw. ein mit ihr bewegbares Teil der Überladebrücke ) an ihrer Unterseite mit einer um eine Querachse pendelnd verschwenkbaren Stutz (10) zum Abstützen der in der Ruhestellung befindlichen Überladebrücke auf einem festen Widerlage (11) versehen ist, dadurch gekennzeichnet, dass die Stütze (10) mittels eines Querbolzens (12) in Brückenlängsrichtung nach vorne und nach hinten an der Verlängerung (7) verschwenkbar und mittels eines zum Eingriff des Querbolzens (12) dienenden Langloches (14) längsverschiebbar gelagert ist in der Weise, dass die Verlängerung (7) in der Ruhestellung der Brücke auf der oberen Stirnfläche der Stütze (10) unter Ausschluss des Querbolzens (12) als Stützmittel aufliegt.

2. Überladebrücke nach Anspruch 1, dadurch gekennzeichnet, dass bei einer Anlage des oberen Endes der Stütze (10) an der Verlängerung (7) zwischen dem Querbolzen (12) und der benachbarten Endrundung des Langloches (14) ein Spiel vorhanden ist oder gerade eine Berührung zwischen dem Querbolzen (12) und der Endrundung erfolgt.

3. Überladebrücke nach Anspruch 1, dadurch gekennzeichnet, dass die Stütze (10) im Abstand von ihrem oberen Ende mit einem Querbolzen (12) versehen ist und die Verlängerung (7) zwei Langlöcher (14) aufweist, in die die beiden überstehenden Enden (13) des Querbolzens (12) hineinragen.

4. Überladebrücke nach Anspruch 1, dadurch gekennzeichnet, dass an der Verlängerung (7) zwei senkrecht abstehende Schenkel (16) befestigt sind, die die Stütze (10) mit einem für eine Pendel-bewegung ausreichenden Spiel zwischen sich aufnehmen und den Querbolzen (12) bzw. ein Langloch (14) aufweisen.

## Claims

1. Transfer bridge for platforms, having a bridge plate (1) which is mounted at its platform end so as to be pivotable about a horizontal axis, and a retractable and extendable extension member (7), which is situated at the free end of the bridge plate (1) and is displaceable in the longitudinal direction of the bridge, for resting and for support on the deck to be loaded or unloaded, the extension member (7) (or respectively a portion of the transfer bridge which is displaceable therewith) being provided on its underside with a support (10), which is oscillatingly pivotable about a transverse axis, for supporting the transfer bridge, which is in its inoperative position, on a fixed abutment (11), characterised in that the support (10) is mounted so as to be pivotable forwardly and rearwardly on the extension member (7) in the longitudinal direction of the bridge by means of a transverse pin (12) and so as to be longitudinally displaceable by means of an elongate slot (14), which serves to engage the transverse pin (12), in such a manner that the extension member (7) rests on the upper end face of the support (10), as a supporting means, when the bridge is in its inoperative position, with the exclusion of the transverse pin (12).

2. Transfer bridge according to claim 1, characterised in that, when the upper end of the support (10) abuts against the extension member (7), there is a clearance between the transverse pin (12) and the adjacent rounded end portion of the elongate slot (14), or there is in fact contact between the transverse pin (12) and the rounded end portion.

3. Transfer bridge according to claim 1, characterised in that the support (10) is provided with a transverse pin (12) at a spacing from its upper end, and the extension member (7) has two elongate slots (14), into which the two protruding ends (13) of the transverse pin (12) project.

4. Transfer bridge according to claim 1, characterised in that two vertically protruding flanges (16) are mounted on the extension member (7), said flanges accommodating the support (10) with a clearance therebetween, which clearance is sufficient for an oscillatory movement, and said flanges being provided with the transverse pin (12) or respectively an elongate slot (14).

## Revendications

1. Niveleur de quai, comportant un tablier (1) monté sur son extrémité se trouvant du coté du quai, qui est susceptible de basculer par rapport à un axe horizontal, et une rallonge (7) se trouvant à l'extrémité libre du tablier (1), susceptible de rentrer et de sortir en se déplaçant dans la direction longitudinale du niveleur de quai, qui est destinée à s'appliquer ou à s'appuyer sur la plateforme à charger ou à décharger, la rallonge (7) (ou une partie du niveleur de quai susceptible de se déplacer avec elle) étant pourvue à sa face inférieure d'un support (10) oscillant autour d'un axe transversal pour assurer l'appui du niveleur de quai en position de repos sur une culée fixe (11), caractérisé en ce que le support (10) est monté au moyen d'un axe transversal (12) au niveau de la rallonge (7), de manière à pouvoir basculer vers l'avant et vers l'arrière dans la direction longitudinale du niveleur de quai, et au moyen d'un trou oblong (14) dans lequel pénètre l'axe transversal (12), de manière à pouvoir se déplacer dans la direction longitudinale, de sorte qu'en position de repos du niveleur de quai, la rallonge (7) repose sur la face frontale supérieure du support (10) sans que l'axe transversal (12) agisse comme moyen d'appui.

2. Niveleur de quai selon la revendication 1, caractérisé en ce qu'il existe un jeu entre l'axe transversal (12) et l'arrondi terminal contigu du trou oblong (14) ou juste un contact entre l'axe transversal (12) et l'arrondi terminal, lorsque l'extrémité supérieure du support (10) s'appuie sur la rallonge (7).

3. Niveleur de quai selon la revendication 1, caractérisé en ce que le support (10) est pourvu à distance de son extrémité supérieure d'un axe transversal (12) et en ce que la rallonge (7) comporte deux trous oblongs (14), dans lesquels pénètrent les deux extrémités (13) en saillie de l'axe transversal (12).

4. Niveleur de quai selon la revendication 1, caractérisé en ce qu'il est fixé sur la rallonge (7) deux branches (16) qui descendent verticalement qui reçoivent entre elles le support (10) en conservant un jeu suffisant pour assurer un mouvement oscillant et qui comportent l'axe transversal (12) ou un trou oblong (14).
